Europäisches Patentamt

European Patent Office

Office européen des brevets

(19)

(11) Publication number: 0 144 587
A2

## (12) EUROPEAN PATENT APPLICATION

(21) Application number: 84111605.6

(22) Date of filing: 28.09.84

(51) Int. Cl.⁴: F 16 D 25/14

(30) Priority: 02.12.83 US 557644

(43) Date of publication of application:
19.06.85 Bulletin 85/25

(84) Designated Contracting States:
DE FR GB IT

(71) Applicant: TRW INC.
23555 Euclid Avenue
Cleveland Ohio 44117(US)

(72) Inventor: Van Elslander, Edmond J.
3423 Pall Drive
Warren Michigan 48092(US)

(72) Inventor: Morgan, Samuel A.
12900 Trinkle Road
Chelsea Michigan 48118(US)

(74) Representative: Leiser, Gottfried, Dipl.-Ing. et al,
Patentanwälte Prinz, Leiser, Bunke & Partner Ernsberger
Strasse 19
D-8000 München 60(DE)

(54) Pressure modulating apparatus.

(57) Apparatus for modulating the fluid pressure directed to a load comprises a housing having an inlet port and an outlet port. A valve member in the housing is movable in a first direction to increase communication between the inlet port and the outlet port and in a second direction to decrease communication between the inlet port and the outlet port. A valve-positioning structure moves the valve member in the first and second directions. The valve positioning structure moves the valve member in the first direction (a) in a first stage of valve operation which causes an increase in the pressure in the outlet port at a first rate and (b) in a second stage of valve operation which causes an increase in the pressure in the outlet port at a second rate that is higher than the first rate. The valve positioning structure initially applies a force to the valve member that is proportional to the pressure desired in the outlet port and which urges the valve member in the first direction, and as the pressure in the outlet port increases applies a force to the valve member that is proportional to the pressure in said outlet port urging the valve in said second direction so that when the outlet pressure reaches the desired pressure the forces acting on the valve member are balanced.

./...

FIG.2

PRESSURE MODULATING APPARATUS

Background and Summary of the Present Invention

The present invention relates to apparatus that controls fluid pressure applied to a load such as a transmission clutch in an automatic transmission of a vehicle.

There are normally two phases of operation that occur when a transmission clutch is being engaged. In an initial phase, fluid force is applied to the clutch to overcome the effect of springs which urge the clutch components apart. During this phase, the friction surfaces on the clutch components are brought together. In the next phase of operation, the friction surfaces of the clutch are forced together by sufficient fluid pressure to produce the required output torque.

The present invention relates to a valve that can modulate the fluid pressure that is applied to a transmission clutch when the transmission clutch is being engaged. The fluid pressure is applied to the clutch in two sequential stages of operation. Specifically, in a first stage of operation, the valve modulates pressure to provide a relatively slow pressure rise as the friction surfaces of the clutch are being brought together. Then, in a second stage of operation, the valve modulates pressure to provide a rapid rate of pressure rise as the clutch begins to transmit torque.

The apparatus of the present invention includes a valve with an inlet connected to a source and an outlet connected to a load. A valve member is movable in a first direction to increase communication between the inlet and the outlet and in a second direction to decrease communication between the inlet and the outlet. The valve includes a valve-positioning structure for moving the valve member. The valve-positioning structure functions during the first stage of valve operation to cause a relative slow increase in the pressure rise at the valve's outlet, and during the second stage of operation to cause a relatively rapid increase in the pressure rise at the valve's outlet.

The valve-positioning structure which operates to position the valve member comprises an actuator piston and an actuator member. The actuator member is movable to control movement of the actuator piston. Movement of the actuator piston causes forces to be applied to the valve member to effect movement of the valve member.

-3-

The movement of the actuator member is controlled by an electrically actuated device, preferably a linear actuator. When the actuator member moves, it controls a fluid pressure force acting on one side of the actuator piston. The pressure force that is applied to the actuator piston depends upon the extent of movement of the actuator member. The actuator piston moves at a rate dependent upon the rate of increase of that fluid pressure force. As the actuator piston moves, it initially applies a force to the valve member through a first stage spring interposed between the actuator piston and the valve member. The amount of force applied to the valve member depends upon the compression of the first stage spring.

A second stage spring is also interposed between the actuator piston and the valve member. When the actuator piston has moved a sufficient distance, the second stage spring begins to act between the actuator piston and the valve member along with the first stage spring, so that the force which is applied to the valve member is then the force of both the first and second stage spring.

When a sufficient force is applied through the first stage spring to the valve member, the valve member moves in a first direction causing the pressure at the valve's outlet to increase. A feedback fluid pressure signal, taken from the outlet, is applied to the valve member and acts on the valve member in opposition to the force

-4-

applied by the first stage spring.  The pressure at the valve's outlet, and thus the feedback pressure force, rises until the force applied to the valve member by the first stage spring is balanced.  When both the first and second stage springs are being compressed, the valve is operating in its second stage and the pressure increases at the outlet at a substantially higher rate than during the time when only the first stage spring is being compressed.

The valve design is such that resistance to movement of the actuator member is minimized.  Thus, a very small force is required to move the actuator member, and the actuator member can therefore be a relatively small, low force carrying member.

The linear actuator that moves the actuator member to initiate operation of the valve can be energized at a constant rate or at a variable rate.  If the linear actuator is energized at a variable rate, the valve will still modulate pressure in two stages, but the rate of pressure rise at the outlet during the two stages will vary in accordance with the variations in the rate at which the linear actuator is energized.

## Brief Description of the Drawings

Further features of the present invention will become apparent to those skilled in the art from the following detailed description of the preferred embodiment thereof made with reference to the accompanying drawings in which:

Fig. 1 is a schematic fragmentary view of a system using the valve of the present invention;

Fig. 2 is a cross sectional view of the valve of the present invention showing parts of the valve in a neutral condition;

Figs. 3, 4, 5 and 6 are fragmentary cross sectional views of the valve of the present invention showing parts thereof in different operating positions; and

Fig. 7 is a graph showing examples of how the pressure is built up in the outlet of the valve.

## Description of Specific Preferred Embodiment

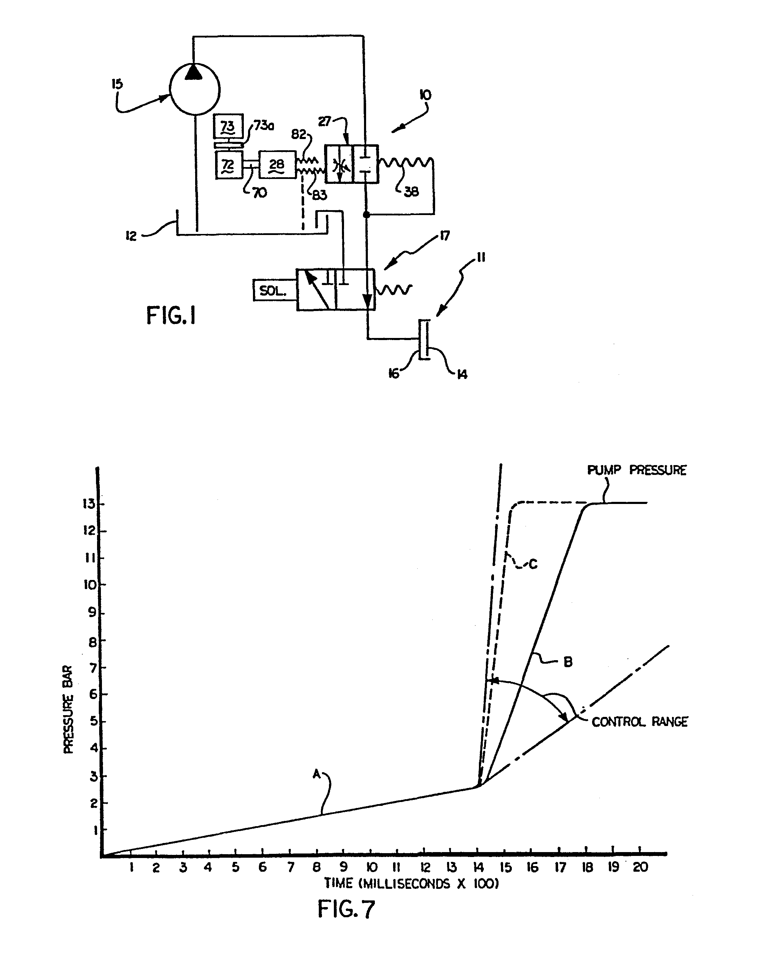

As noted hereinabove, the present invention relates to a pressure modulating apparatus which controls the pressure directed to a load. In Fig. 1, such a valve is shown schematically at 10, in a system which controls a vehicle transmission clutch 11. The clutch 11 includes two clutch parts 14 and 16 which are engaged to transmit torque therebetween. In a vehicle transmission, a plurality of such clutches would be utilized. However, only one is illustrated in Fig. 1.

As shown in Fig. 1, the system includes a pump 15 which directs fluid pressure from a reservoir 12 to the valve 10. The valve 10 controls the fluid pressure directed to the clutch 11. A solenoid valve 17 is interposed between the valve 10 and the clutch 11. The solenoid valve 17 is spring biased into a position directing flow to the clutch 11. The valve 17 can be moved, by energization of a solenoid, to a position in which it directs fluid from the clutch 11 to the reservoir 12.

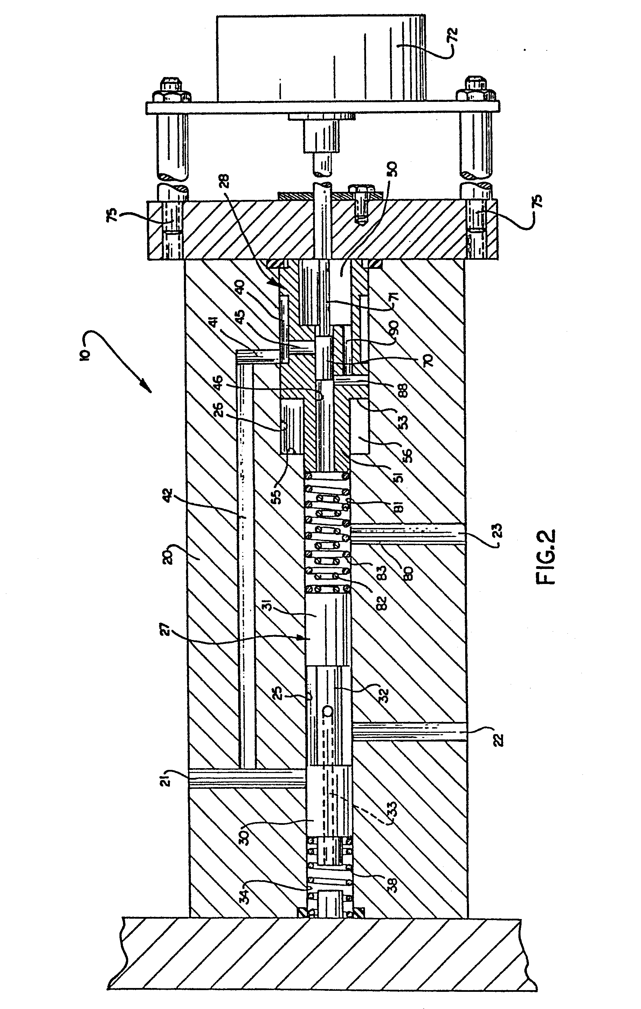

As shown in Fig. 2, the valve 10 includes a housing 20. The housing 20 has an inlet port 21 connected with the pump 15, an outlet port 22 connected with the clutch 11, and a drain port 23 connected with the reservoir 12. The valve's housing 20 includes a generally cylindrical control valve chamber 25 and a coaxial actuator piston chamber 26 of larger diameter than the chamber 25. A control valve member or spool 27 is located in the control valve chamber 25, and an actuator piston 28 is located in the actuator piston chamber 26.

The control valve spool 27 is generally cylindrical and has a pair of lands 30, 31. The lands 30, 31 are spaced apart and are interconnected by a central spool portion 32 that has a smaller diameter than lands 30, 31. A passage 33 is located inside and is coaxial with the spool 27. The passage 33 extends from the central spool portion 32 to the left hand end (as viewed in the drawings) of the spool 27 and communicates fluid pressure at the outlet port 22 with a cavity 34 on the left end of the spool 27. A spring 38 is located in the cavity 34 and acts, together with the pressure in cavity 34, to urge the spool 27 to the right, as illustrated in the drawings.

The actuator piston 28 is generally cylindrical, but has a reduced diameter nose portion 51 which extends into the control valve chamber 25. A surface 53 of the piston 28 extends radially from the nose portion 51 to the outer periphery of the piston 28. In the postion of the actuator piston 28 shown in Fig. 1, the radially extending surface 53 on the actuator piston is spaced axially from a facing radial surface 55 on the housing 20. Together, the surfaces 53 and 56, the outer circumferential surface of the nose portion 51, and the inner circumferential surface of chamber 26 define a variable volume chamber 56.

The main body of the actuator piston 28 has an annular recess 40 at its outer periphery. The annular recess 40 communicates, via radial passage 41 and axial passage 42 formed in the housing 20, with the inlet port 21. A passage 45 formed in the piston 28 also communicates with the annular recess 40 and extends radially inward from the annular recess 40. The radially inner end of the passage 45 communicates with a passage 46 that extends axially through the actuator piston 28. At one end, the passage 46 communicates, through the end of the nose portion 51, with the control valve chamber 25. At its other end, the passage 46 communicates with a recess 50 formed in the right end of the piston 28.

An actuator member 70 is positioned in the axial passage 46 in the actuator piston 28. The actuator member 70 is attached to a stem 71 which, in turn, is connected to a conventional linear actuator 72. A typical linear actuator which may be used is sold by Airpax Corporation, as a Digital Linear Actuator, 92200 Series. The linear actuator 72 is energized in steps by electrical pulses or signals and moves the stem 71 and the actuator member 70 axially. The control of the linear actuator 72 will be discussed in more detail hereinbelow. The linear actuator 72 is attached to the housing 20 of the valve 10 by suitable fasteners 75.

When the actuator member 70 and piston 28 are in the positions shown in Fig. 2, the valve 10 is in its neutral position. When the valve 10 is in its neutral position, fluid communicated from the pump 15 to the inlet port 21 is blocked by the land 30 on the control valve spool 27. Thus, no fluid is directed to the outlet port 22. The fluid pressure at the inlet port 21 is communicated, via passages 42 and 41 in the housing 20, to the annular recess 40 on the outer periphery of the actuator piston 28. That fluid pressure is also communicated to the radial passage 45, which is blocked by the actuator member 70.

The drain port 23 of the valve 10 is communicated, by a radial passage 80 in the valve housing 20, to a portion 81 of the control valve chamber 25 located between the nose 51 of the actuator piston 28 and the land 31 of the control valve spool 27. Also located in the chamber portion 81 are a pair of springs 82, 83 in a nested relationship. The springs 82, 83 have relatively high spring rates as compared to the spring 38. Moreover, the spring 82 has a higher spring rate than the spring 83. The spring 82 is a righthand coiled spring and spring 83 is a lefthand coiled spring.

When the pump 15 is operating, but the linear actuator 72 is not energized, the valve 10 comes to the neutral position illustrated in Fig. 2. When the valve 10 is in the neutral position, the spring 83 is under a light compression, and biases the valve spool 27 and the actuator piston 28 apart. The actuator piston 28 is in an extreme righthand position, and the spring 82 is not in engagement with the piston 28.

As noted above, the chamber portion 81 is communicated with the drain port 23. The chamber portion 81 also communicates with the axial passage 46 in the actuator piston 28. Further, when the actuator member 70 and actuator piston 28 are in the neutral position of Fig. 2, the actuator member 70 uncovers a radially extending passage 88 in the actuator piston, resulting in communication of the passage 46 with the passage 88 in the actuator piston 28. The radial passage 88 communicates with an axially extending passage 90 in the actuator piston

-10-

28, and the passage 90 communicates with the recess 50 at the right end of the actuator piston 28. Thus, when the valve parts are in the position illustrated in Fig. 2, the chamber 50 communicates with the drain port 23 through passage 90, radially extending passage 88, passage 46, and chamber portion 81.

When the linear actuator 72 is energized, the actuator member 70 is moved to the left from the position illustrated in Fig. 2 to a position such as is illustrated in Fig. 3. In the position shown in Fig. 3, the actuator member 70 blocks the passage 88, thus blocking communication between the recess 50 and the drain port 23. Simultaneously, the actuator member 70 uncovers the passage 45 in the actuator piston 28, establishing communication between the recess 50 and the inlet port 21. Thus, when the actuator member 70 is moved to the left to the position shown in Fig. 3, pressure from the inlet port 21 is communicated to the chamber 50. This increases pressure in the recess 50 and applies a fluid force to the actuator piston 28, urging the piston 28 toward the left, as illustrated in the drawings.

When the actuator piston 28 moves to the left, a force is applied, through the spring 83, to the control valve spool 27. When the force is great enough, it will overcome the force applied by the return spring 38 and the fluid pressure in chamber 34, and the valve spool 27 will move to the left from the position shown in Fig. 2. When the valve spool 27 moves, it establishes communication between the inlet port 21 and the outlet port 22 of the valve. Thus, inlet pressure is communicated to the outlet port 22 through an orifice defined by the land 30 and the port 21. Hence, fluid flows from the inlet port 21 to the outlet port 22 and into the clutch 11.

The fluid pressure in chamber 25 is communicated to chamber 34 via passage 33. The pressure in chamber 34 acts on the left end of the spool 27 and forces the spool to the right compressing spring 83 or springs 82, 83, as will be described hereinbelow. Compression of spring 83 continues until a force balance is attained between the spring force on the right and the force of spring 34 and the pressure times the spool area on the left. Movement of spool 27 to the right causes spool land 30 to restrict port 21 which causes a restriction in flow. The forces on the valve spool 27 becomes balanced with an established pressure in chamber 34 and in outlet port 22.

When the valve spool 27 is in a particular balanced position, leakage occurs across land 31 to chamber 81 and to drain. When this occurs pressure drops in chamber 34 unbalancing the forces on spool 27. This results in the spring 83 or springs 82, 83 moving the spool 27 to the left increasing the opening of port 21 to the chamber 25. This cycle is repeated over and over again at a very high frequency and in effect maintains the desired pressure in chamber 25 and port 22. The oscillation of land 30 relative to port 21 due to leakage could become unstable. To eliminate instability a dampening orifice can be inserted in passage 33 to reduce the frequency to a stable condition. This optional damping orifice is not shown in the figures.

The regulated pressure level is determined by the amount of movement to the left of actuator piston 28 and the amount of movement of the actuator piston 28 is in turn controlled by the amount of movement in the actuator member 70.

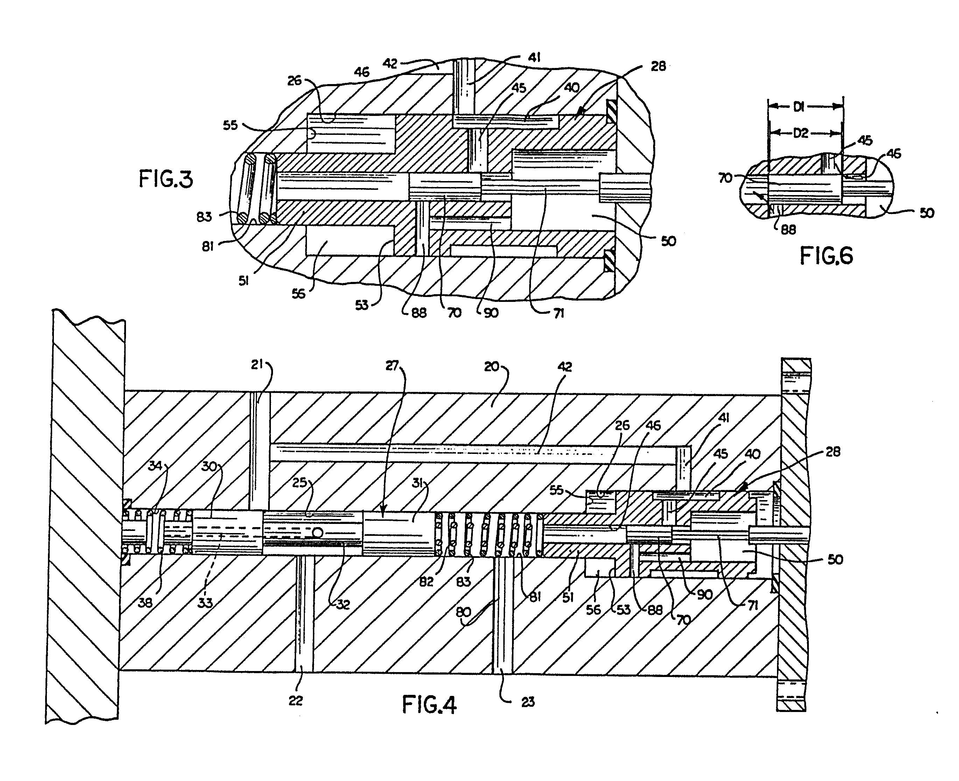

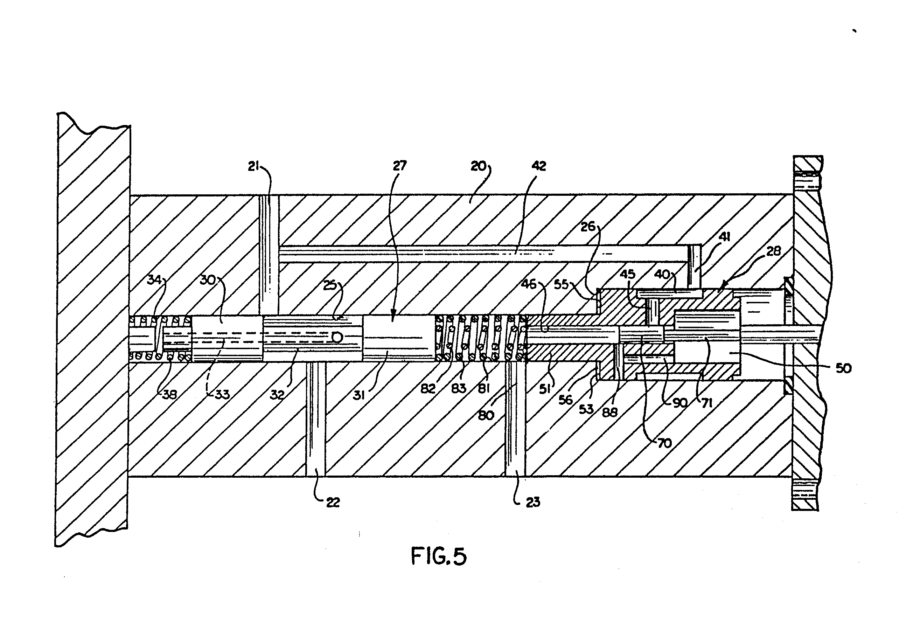

Fig. 4 illustrates a position of the valve parts when only first stage spring 83 is compressed by the actuator piston 28. Fig. 5 illustrates a position of the valve parts when both the first and second stage springs 83 and 82, respectively, are compressed by the actuator piston 28. When the actuator piston 28 has moved far enough that both the first and second stage springs 83, 82 are compressed, the force applied to the valve spool 27 increases substantially because now both springs 82, 83 are applying forces to the valve spool 27. Thus, for a given increment of movement of actuator piston 28, a greater force is applied to spool 27. As a result, the pressure in the chamber 25, chamber 34 and port 22 increases to a substantially higher level, resulting in a greater increase in pressure per increment of displacement of the actuator member 70. As noted above, as the pressure rises in chamber 34 the valve spool 27 moves to the right against springs 83, 82 and eventually reaches a new balanced condition with a higher pressure in the outlet port 22 in dependence upon the force applied by both springs 82, 83 to the valve spool 27.

As discussed above, whenever the actuator member 70 is moved from the neutral position of Fig. 2 to an actuated position such as shown in Fig. 3, the actuator piston 28 moves in a follow-up fashion to apply force to the valve spool 27. Initially, the forces on the right side of the valve spool 27 try to move the spool 27 without compression of the springs 82, 83. However, as soon as fluid pressure is communicated to the outlet 22, that fluid pressure is instantaneously communicated to the chamber 34 on the left of the valve spool 27. As the actuator piston 28 moves the valve spool 27 and the pressure in cavity 34 acting on the valve spool 27 resists such movement, the first stage spring 83 and possibly the second stage spring 82 are compressed.

If the actuator member 70 stops, the actuator piston 28 will continue to move until the actuator member 70 and actuator piston 28 reach the relative positions shown in Fig. 6. In those positions, the actuator member 70 slightly covers both the passages 45 and 88 in the actuator piston 28. The length $D_1$ of the actuator member 70 is slightly greater than the maximum distance

$D_2$ from the passage 45 to the passage 88. Thus, the actuator member 70 can take the position shown in Fig. 6. There is some leakage of inlet fluid across the actuator member 70 and to the chamber 50, and leakage of fluid from the chamber 50 through passage 88, across the actuator member 70 and to the reservoir 12. Thus, there may also be some quivering of the actuator piston 28, but the actuator piston 28 and the actuator member 70 effectively remain in the relative positions shown in Fig. 6.

The operation of the valve spool 27 of the present invention is illustrated graphically in Fig. 7. The graph of Fig. 7 illustrates outlet port pressure versus time. As shown, during the first stage of operation of the valve, that is, during the stage when the spring 83 only is being compressed and the spring 82 is not being compressed, and assuming the control signals are being applied to the linear actuator 72 at a constant velocity, the pressure in the outlet port 22 will rise substantially linearly and at a low or relatively slow rate. This is illustrated by the portion A on the graph. Assuming that the control signals are applied at the same constant rate as during compression of spring 83 only, and both springs 83, 82 are being compressed, an increased force is applied to the control valve spool 27 for a given increment of movement of the actuator member 70. Thus, pressure increases in the outlet port 22 at a relatively higher, linear rate. This is illustrated by the portion B of the graph in Fig. 7.

In accordance with the present invention, the signals which are appled to the linear actuator 72 may be controlled from a programmable controller 73 (Fig. 1). A suitable controller 73 is sold by Motorola Incorporated, as their Model MC 6801, microprocessor. The controller 73 actuates the linear actuator driver 73a which is also sold by Motorola as Model SAA 1042. The control signals or pulses may be applied to the linear actuator 72 at a constant velocity as discussed above or a variable velocity. For example, if the signals are applied to the linear actuator 72 at a higher velocity during the second stage of operation of the valve, the rate of pressure change may increase to that indicated by the line designated C in Fig. 7. In effect, by controlling the rate of the application of the signals to the linear actuator, any type of a control curve could be attained even curvilinear, both in the first and second stages of operation. As shown in dot-dash lines in the graph of Fig. 7, the control range of pressure increase is illustrated as being between those lines.

Further, it is significant to note that the design of the valve allows the actuator member 70 to be a relatively small member. Specifically, the lefthand end of actuator member 70 is continuously communicated with chamber portion 81 which is continuously communicated with the drain. Thus, the actuator member 70 has to work against minimal fluid pressure when it moves to the left to cause an increase in the pressure at the valve's outlet port 22.

When the actuator member 70 is moved rightwardly from the condition such as shown in Fig. 6, it communicates chamber portion 81 with recess 50. Fluid from the recess 50 is then bled to the reservoir 12, allowing the springs 83, 82 to push the actuator piston 28 to the right, as shown in the drawings. The valve member 27 will move to the right by the force of spring 38 and the pressure in chamber 34. Thus, the valve parts will return toward their neutral position. The actuator member 70 displaces fluid in chamber 50 as the actuator member 70 is moved from the position of Fig. 6 toward the right. This fluid passes through passages 90, 88, 46 and chamber 81 to drain. Thus, actuator member 70 may be readily moved by the force of the linear actuator.

From the above, it should be clear that the valve member 27 is moved by a valve-positioning means. The valve-positioning means includes the linear actuator 72, actuator member 70, actuator piston 28, springs 82, 83 which control the force acting to move the valve member 27 in one direction, and the spring 38, and the pressure in chamber 34 which act on the valve member 27 to move it in the other direction.

As forces are applied to the valve member 27, the pressure in cavity 34 rises in accordance with rising pressure at the outlet port 22. Pressure will continue to rise at the outlet port 22, at a rate established by the rate of movement of the actuator member 70 and the first and second stage springs 83, 82, until the forces acting on the valve member 27 are balanced. At that point, the pressure at the outlet port 22 will be the full amount needed for the second stage of operation of the load.

When the valve of the invention operates the transmission clutch 11, the relatively low rate of pressure rise (i.e., A on the graph of Fig. 7) occurs while the mechanical springs of the clutch are being overcome, and the clutch members 14, 16 are being brought together. This occurs over approximately 14 hundreths of a millisecond in the disclosed embodiment. The relatively higher rate of pressure rise (line B) occurs as the clutch members 14, 16 begin to transmit torque and this occurs over approximately 4 hundreths of a millisecond in the disclosed embodiment. Thus, the valve modulates fluid in a manner that correlates to the phases of operation of the clutch, and which helps provide for smooth operation of the clutch over a variety of operating conditions.

In view of the foregoing, it should be apparent that applicants have developed a highly sophisticated and unique pressure modulating apparatus.

What is claimed is:

1. A valve for modulating the fluid pressure directed to a load, said valve comprising:

a housing having an inlet port and an outlet port,

a valve member in said housing movable in a first direction to increase communication between said inlet port and said outlet port and in a second direction to decrease communication between said inlet port and said outlet port, and

valve-positioning means for moving the valve member in said first and second directions, said valve positioning means moving said valve member in said first direction in a first stage of valve operation that causes an increase in the pressure in the outlet port at a first rate and moving the valve member in said first direction in a second stage of valve operation that causes an increase in the pressure in the outlet port at a second rate that is higher than the first rate, said valve positioning means including

means for applying a force to said valve member that is proportional to a pressure desired in the outlet port and which urges said valve member in said first direction, and

means for applying a force to said valve member that is proportional to the pressure in said outlet port urging said valve member in said second direction so that when the outlet pressure reaches the desired pressure the forces acting on said valve member are balanced.

2. A valve as set forth in claim 1 wherein said means for applying a force to urge said valve member in said first direction includes an actuator piston, spring means disposed between said actuator piston and said valve member, and means for applying a fluid pressure force to said actuator piston, said spring means being disposed to transmit force from said actuator piston to said valve member to apply a force to said valve member in said first direction.

3. A valve as set forth in claim 2 wherein said means for applying a force for urging said valve member in said first direction includes an electrically operated actuator member for controlling the fluid pressure force applied to said actuator piston, said electrically operated actuator member being movable relative to said actuator piston to control the pressure applied to the actuator piston.

4. A valve as set forth in claim 3 including a first fluid pressure chamber disposed between the actuator piston and the valve member, a second fluid pressure chamber separated from the first chamber by the actuator piston, and a third fluid chamber separated from the first chamber by the valve member, means for continuously communicating the first fluid chamber to a reservoir, first passage means for communicating the first fluid pressure chamber with the second chamber, second passage means for communicating the inlet port with the first fluid chamber, the actuator member being movable relative to the first and second fluid passage means for controlling communication between the second fluid chamber and the inlet port and between the second fluid chamber and the first fluid chamber.

5. A valve as set forth in claim 4 wherein said spring means includes first and second stage spring means disposed between the actuator piston and the valve member, the first stage spring means acting continuously between the actuator piston and the valve member and resisting movement of the piston and valve member toward each other, the second stage spring means acting between the actuator piston and the valve member after a predetermined amount of relative movement of the actuator piston and the valve member toward each other to further resist movement of the actuator piston and the valve member toward each other.

6. A valve as set forth in claim 5 including a return spring disposed in said third fluid chamber and acting continuously on the valve member in opposition to the first and second stage spring means, and means continuously communicating said outlet port to said third fluid chamber so that fluid pressure at the outlet port is continuously communicated to the third fluid chamber.

7. A valve for modulating the fluid pressure directed to a load, said valve comprising:

a housing having an inlet port and an outlet port,

a valve member in said housing movable in one direction to increase commmunication between said inlet port and said outlet port and in a second direction to decrease communication between said inlet port and said outlet port,

valve-positioning means for moving said valve member to cause an increase in the pressure in the outlet port, said valve-positioning means including (a) means for applying to the valve member a force proportional to a pressure desired in the outlet port to urge said valve member in said one direction including an electrically actuated device and a member movable thereby, and (b) means against which the pressure in said outlet port acts so that when the outlet pressure reaches the desired pressure the forces acting on said valve member are balanced, and

means for controlling the rate of energization of the electrically actuated device and thus the rate of movement of said valve member to control the rate of the pressure increase at said outlet.

8. A valve as set forth in claim 7 wherein said member moved by said electrically actuated device comprises an actuator member and said valve positioning means further including an actuator piston moved by fluid pressure, said actuator member controlling a fluid pressure force acting on said actuator piston and spring means disposed between said actuator piston and said valve member.

9. A valve as set forth in claim 8 including a first fluid pressure chamber disposed between the actuator piston and the valve member, a second fluid pressure chamber separated from the first chamber by the actuator piston, and a third fluid chamber separated from the first chamber by the valve member, means for continuously communicating the first fluid chamber to a reservoir, first passage means for communicating the first fluid pressure chamber with the second chamber, second passage means for communicating the inlet port with the second fluid chamber, said actuator member being movable relative to the first and second passage means for controlling communication between the second fluid chamber and inlet port and between the second fluid chamber and the first fluid chamber.

10. A valve as set forth in claim 9 wherein said spring means includes first and second stage spring means disposed between the actuator piston and the valve member, the first stage spring means acting continuously between the actuator piston and the valve member and resisting movement of the actuator piston and valve member toward each other, the second stage spring means acting between the actuator piston and the valve member after a predetermined amount of relative movement of the actuator piston and the valve member toward each other to further resist movement of the actuator piston and the valve member toward each other.

11. In an apparatus having a source of fluid, a transmission having fluid actuated clutch means, and a valve member for modulating fluid pressure directed from the source to the clutch means for engaging the clutch means so that torque can be transmitted through the clutch means, the improvement comprising valve-positioning means for actuating said valve member in a first stage of valve operation that causes an increase in the pressure in the clutch means at a first rate during engagement of the clutch means and for actuating the valve member in a second stage of valve operation that causes an increase in the pressure in the clutch means at a second rate that is higher than the first rate during the initial transmission of torque through the clutch means.

12. An apparatus as defined in claim 11 wherein said valve positioning means includes means for applying a force to said valve member which is proportional to the pressure that is desired to be applied to said clutch means and which urges said valve member in a first direction, and means for applying a force to said valve member that is proportional to the pressure that is directed to said clutch means urging said valve member in a second direction opposite to said first direction so that when the pressure directed to said clutch means reaches the desired pressure the forces acting on said valve member are balanced.

13. An apparatus as set forth in claim 12 wherein said means for applying a force to urge said valve member in said first direction includes an actuator piston, spring means disposed between said actuator piston and said valve member, and means for applying a fluid pressure force to said actuator piston, said spring means being disposed to transmit force from said actuator piston to said valve member to apply a force to said valve member in said first direction.

14. An apparatus as set forth in claim 13 wherein said means for applying a force for urging said valve member in said first direction includes an electrically operated actuator member for controlling the fluid pressure force applied to said actuator piston, said electrically operated actuator member being movable relative to said actuator piston to control the pressure applied to the actuator piston.

15. An apparatus as set forth in claim 14 including a first fluid pressure chamber disposed between the actuator piston and the valve member, a second fluid pressure chamber separated from the first chamber by the actuator piston, and a third fluid chamber separated from the first chamber by the valve member, means for continuously communicating the first fluid chamber to a reservoir, first passage means for communicating the first fluid pressure chamber with the second chamber, second passage means for communicating the source with the first fluid chamber, the actuator member being movable relative to the first and second fluid passage means for controlling communication between the second fluid chamber and the source and between the second fluid chamber and the first fluid chamber.

16. An apparatus as set forth in claim 15 wherein said spring means includes first and second stage spring means disposed between the actuator piston and the valve member, the first stage spring means acting continuously between the actuator piston and the valve member and resisting movement of the piston and valve member toward each other, the second stage spring means acting between the actuator piston and the valve member after a predetermined amount of relative movement of the actuator piston and the valve member toward each other to further resist movement of the actuator piston and the valve member toward each other.

0144587

FIG.1

FIG.7

0144587

FIG.2

0144587

FIG.3

FIG.4

FIG.6

FIG.5